# EUROPEAN PATENT SPECIFICATION

(11) **EP 1 550 801 B1**
(45) Date of publication and mention of the grant of the patent: **13.05.2009**
(21) Application number: 04106989.9
(22) Date of filing: 27.12.2004
(51) Int. Cl.: F02B 43/00, F02F 1/42, F02B 75/20

(54) **Cylinder head for a gas engine and method of production**
Zylinderkopf für eine Gasbrennkraftmaschine und Verfahren zur Herstellung
Culasse pour un moteur à combustion interne à gaz et procédé de sa fabrication

(30) Priority: 30.12.2003 IT MI20032616
(43) Date of publication of application: 06.07.2005
(73) Proprietor: IVECO S.p.A., 10156 Torino (IT)
(72) Inventor: Dellora, Giancarlo, 10129 Torino (IT)
(74) Representative: Gervasi, Gemma

(56) References cited:
- EP-A- 0 510 585
- EP-A- 0 915 248
- EP-A- 1 219 797
- GB-A- 2 359 589
- US-A1- 2002 166 515
- US-A1- 2003 084 877
- US-B1- 6 196 204

## Description

### BACKGROUND OF THE INVENTION

This invention relates to an engine with multi-point fuel injection and, more particularly, to a gas engine and a system used to inject the gas into such engine.

### PRIOR ART

The injection of fuel into a single injection point in an appropriately-shaped distributor (for example, Venturi type) through which the air is delivered is common practice in the field of alternating gas engines. The distributor leads out into a set of supply ducts that carry the air mixed with the fuel to the cylinders. This simple solution is characterized by various drawbacks. The distance between the point of injection and the inlet to the various cylinders causes a delay in cylinder response to changes in gas delivery and thus delays response times when more power is requested. Non-optimal mixing, which is always a possibility in certain air velocity conditions, may result in an unbalanced air/fuel ratio being supplied to the various cylinders.

Multi-point injection systems, in which the gas is fed to the inlet of the ducts that supply the cylinders, have been proposed as a means of overcom ing this drawback. In order to obtain satisfactory mixing, such systems use tubes that pass through the distributor and carry the gas to the inlet of the ducts, at the center of the gap. This solution entails problems due to the fact that the tubes interfere with the air flow and cause vibrations, with the result that the tubes are easily damaged. Furthermore, the system is not yet capable of guaranteeing satisfactory mixing and, in certain phases of cylinder operation, the mix may flow back from the duct to the distributor and interfere with delivery to the various cylinders.

For the reasons set forth above, the presence of the air-fuel mixture in the distributor, inevitable in the case of single-point injection, and possible, at least partially, in the case of multi-point injection, also constitutes a hazard in the case of faults, due to the presence of large volume s of gas mixture in flammable conditions.

### SUMMARY

The above problems have now been solved using an internal combustion engine comprising:
one or more cylinders;
a distributor for the intake air
one or more intake ducts connecting said distributor to the inlet of said cylinders, delimited by at least one wall;
a fuel injection channel for each of said ducts, such channel passing through such wall, in correspondence of a protuberance thereof.

The engine is preferably a gas engine and more preferably gas containing methane, for example natural gas.

In a preferred embodiment of the invention, said distributor and said ducts are part of a cylinder head consisting of a set of parts, obtained through casting, and the injection channels are obtained by perforating one of said parts. The invention also refers to a cylinder head as described above.

The invention also concerns a system used to supply a gaseous fuel to an engine comprising several cylinders, each with an intake duct, into which the fuel is injected through a wall of said duct.

The invention refers in particular to the contents of the claims attached.

### LIST OF DRAWINGS

This invention will now be illustrated through a detailed description of the preferred but not exclusive embodiment, furnished merely by way of example, with the aid of the drawings attached, of which:
figure 1 is a schematic drawing illustrating the cylinder head of a gas engine according to this invention, seen from the side to which the cylinder block is fastened;
figure 2 is a schematic drawing illustrating a cross-sectional view in the plane AA of the cylinder head illustrated in figure 1;
figure 3 is a schematic drawing illustrating a cross-sectional view in the plane BB of the cylinder head illustrated in figure 1;
figure 4 is a schematic drawing illustrating a cross-sectional view in the plane CC of the cylinder head illustrated in figure 1;
figure 5 is a schematic drawing illustrating a cross-sectional view in the plane DD of the cylinder head illustrated in figure 1.

### DETAILED DESCRIPTION OF A PREFERRED EMBODIMENT

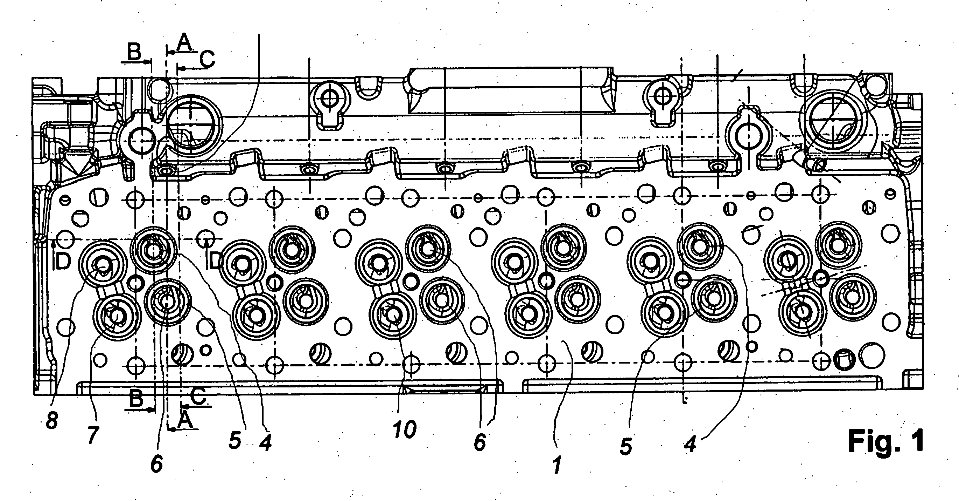

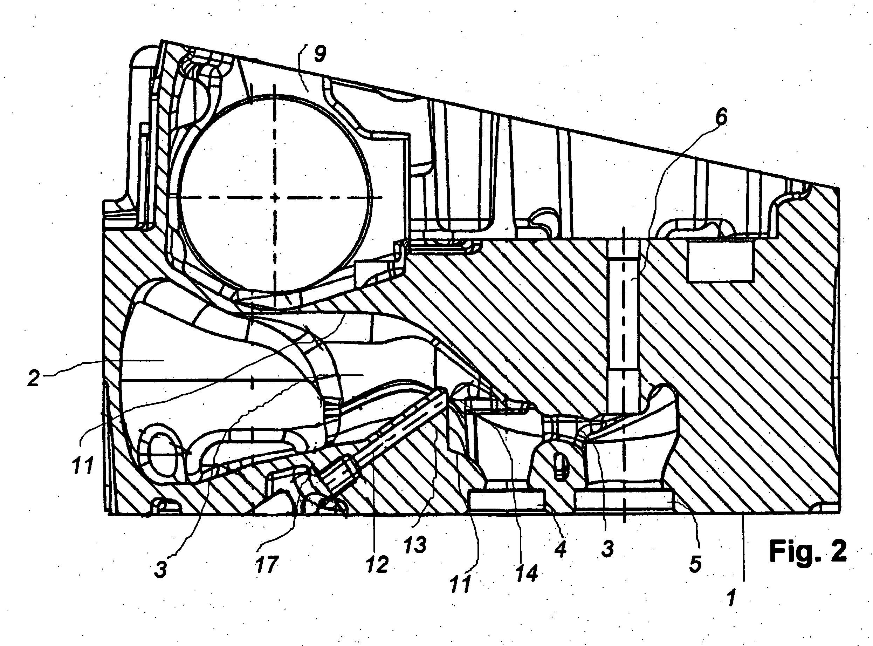

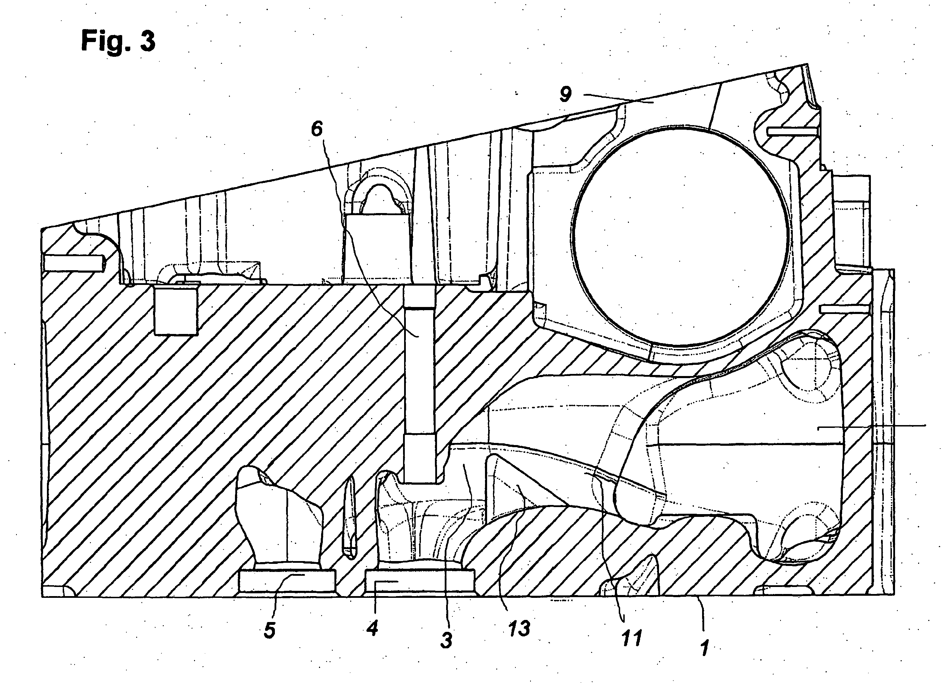

Figure 1 shows the cylinder head of a gas engine seen from the side (surface 1) to which a cylinder block, including therefore the cylinders, is to be fastened (for example, using a set of bolts). The cylinder head illustrated is characterized (figures 2, 3 and 4) by a distributor 2 (basically a manifold) connected with a set of intake ducts 3 that carry air to the cylinders. In the case illustrated in the figures, but not necessarily, such ducts separate, so as to supply the cylinder through two intake valves, this being an engine with four valves per cylinder. For this reason, for each cylinder, the cylinder head is characterized by two openings 4 and 5 with which the intake ducts terminate. The stems of the valves designed to open and close the inlet to the cylinder periodically pass through the thru holes 6 that are present at the openings; the stems will engage appropriately against the walls of the holes 6 and transmit movement to the valves, via rocker arms or appropriate structures, from a camshaft that may be located on the cylinder head, on the side opposite surface 1: a ring-shaped support 9, forming part of the cylinder head and intended to support the camshaft, is visible in figures 2, 3 and 4; several aligned supports are preferably envisaged. The cylinders will be fitted with the intake valves located at openings 4 and 5.

Similarly, the discharge openings 7 and 8, through which the exhaust gases enter a discharge duct, can also be observed. The discharge ducts of the various cylinders can lead into a common exhaust gas manifold. The stems of the discharge valves can connect the valves to the camshaft, similarly to the stems of the intake valves, through the holes 10.

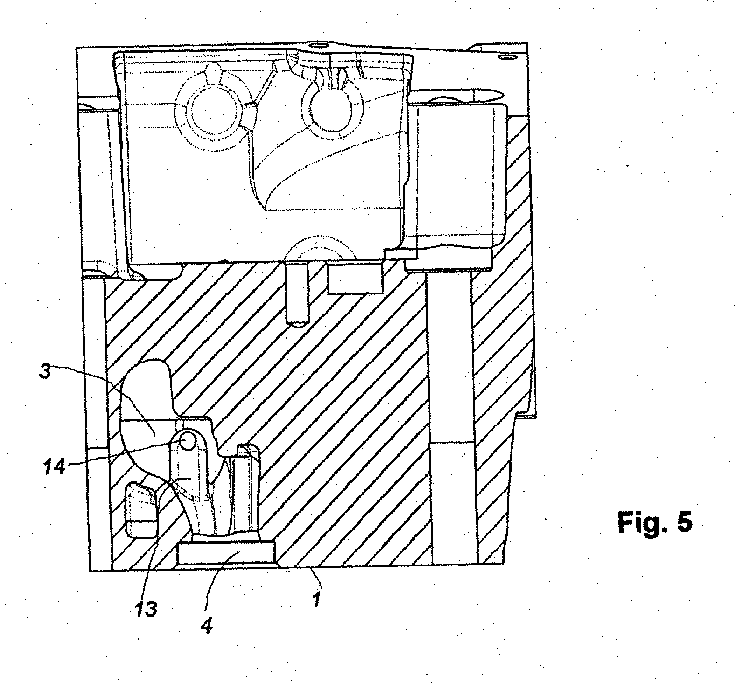

The intake ducts 3, one of which is visible in a sectional view in different planes in figures 2, 3, 4 and 5, are delimited by a wall 11. According to this invention, an injection channel 12 of the preferably gaseous fuel passes through said wall; a longitudinal cross-section of said injection channel is visible in figure 2. According to the preferred embodiment of the invention, the wall 11 is characterized by a protuberance 13 towards the inside of the duct 3, at the position of the outlet 14 of the channel 12 in the duct. Such protuberance is advantageous because it makes it possible to position the outlet in the most suitable manner inside the intake duct, taking into account the fluid-dynamics of the gas in the duct in operating conditions, in order to optimize mixing of the fuel with the air. Furthermore, the protuberance can easily be obtained in a single piece with the part of the cylinder head with the portion of wall of the duct affected by the injection channel, a part that can be obtained, for example, through casting. In this way, it is also easy to obtain the protuberance of a suitable shape, for example a shape that minimizes loss of head of the gas flowing in the duct. According to a further aspect of the invention, the outlet 14 can positioned at a curve or in any case at a section of the duct 3 in which air velocity changes direction, so as to exploit the mixing effect stemming from the turbulence generated. In the presence of a curve in the duct 3, the protuberance, if present, or the outlet of the channel, can be positioned preferably at the internal side of the curve. The protuberance may be of any suitable shape. According to a preferred embodiment, it is fin-shaped, as illustrated in figures 2, 3 and 4, the first of which shows a sectional view while in the other two it is viewed from the side. As illustrated in figure 2 the cross-section of the protuberance, based on a plane containing the axis of the duct 12, is substantially triangular with two sides 15 and 16 that may be straight or with various types of curve as considered appropriate; this cross-section plane is substantially perpendicular to the wall 11 of the duct at the position of the protuberance. According to a particular embodiment of the invention, the side 16, facing towards the connection openings 4 and 5 with the cylinder of the duct, is shorter than the side 15 facing towards the distributor 1, and the outlet 14 is at least partially facing the side 16. The channel 12 may or may not be straight; if it is straight, its axis may preferably lie in a plane substantially parallel to the direction of the air in the duct 3 in operating conditions.

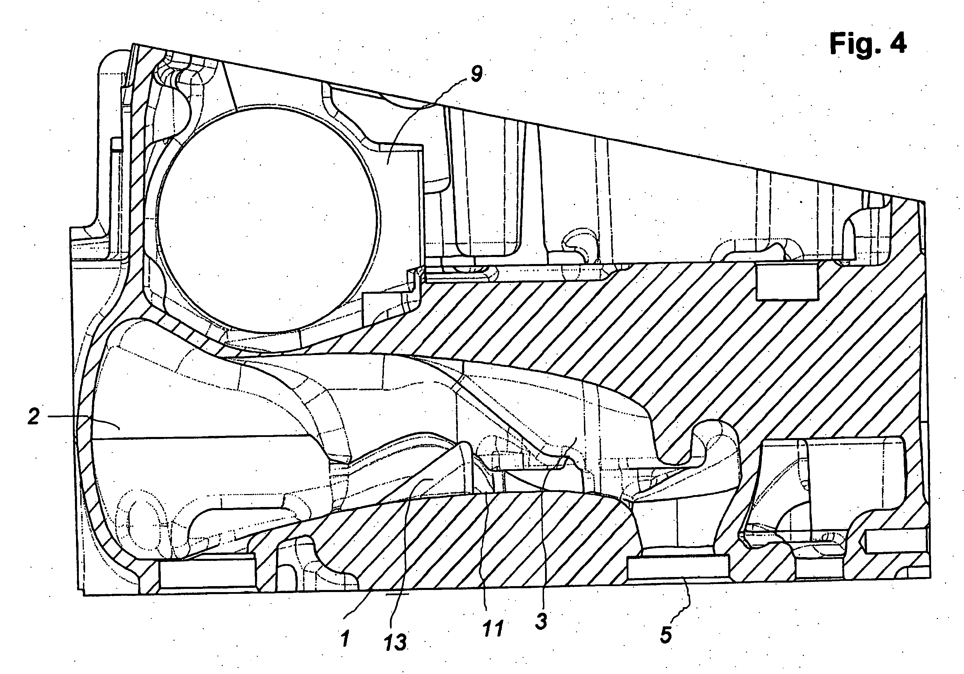

The width of the protuberance in a direction perpendicular to the cross-section plane described above is preferably smaller than the other dimensions, as illustrated in figure 4. It may be substantially constant, as shown in the drawings, or variable; for example it may be largest at the base and then taper towards the top where the outlet 14 of the channel is located.

The channel may be characterized by means of connection 17 with external fuel supply devices, for example pipes for the gas. The case shown in the example is an internally threaded portion of the channel in which the end of a pipe may be screwed but any known system considered suitable is possible.

The invention also regards a method of production of a cylinder head as described above, including the use of the casting process to obtain a part of said cylinder head including a portion of said wall 11 with at least one intake duct, and subsequent creation of an opening in the wall, for example using a drill, to form a fuel injection channel that passes through said wall. Preferably said wall of the duct is characterized by a protuberance and the channel is opened at the position of such protuberance.

The cylinder head shown is suitable for a six-cylinder engine but the invention may be applied to an engine with any number of cylinders, preferably more than one.

Technicians skilled in the art will have no difficulty in identifying other suitable configurations for the ducts, protuberances and injection channels, also according to the type of engine to be constructed.

This invention optimizes the fuel supply to an engine, such as a gas engine, in which the air must be mixed with the fuel before entering the cylinder. Injection takes place close to each cylinder, without the need to insert tubes that cross the distributor of the injection air as in the case of prior art multi-point injection technology, avoiding problems of interference with gas flows and possible vibrations and breakage associated with such technology. Also creation of a protuberance forming part of the wall of the intake duct, and preferably forming an integral part of this, permits optimal shaping of the intake duct as regards fluid-dynamics and makes it possible to obtain good mixing of the air and fuel. The injection system is considerably stronger and has a much longer life than the systems used to-date.

## Claims

1. Internal combustion engine comprising:
one or more cylinders;
a distributor (2) for the intake air;
one or more intake ducts (3) connecting said distributor to the infeed of said cylinders, ducts delimited by at least one wall (11); a fuel injection channel (12) for each of said ducts passing through said wall; **characterized by** the fact that said wall has a protuberance (13) at the position of the outlet (14) of said channel inside said duct.

2. Engine according to claim 1, **characterized by** the fact of being a gas engine.

3. Engine according to claim 1 or 2, **characterized by** the fact that the section of said protuberance, in a plane containing an axis of said channel and perpendicular to the wall of the duct, is more or less triangular.

4. Engine according to any of the previous claims, **characterized by** the fact that said protuberance is one piece with at least one portion of said wall of the duct.

5. Engine according to any of the previous claims, in which the duct is
**characterized by** a curve and the outlet (12) of the injection channel is located at the position of said curve.

6. Engine according to claim 5, **characterized by** the fact that said protuberance is positioned at the inside part of said curve.

7. Cylinder head for combustion engine including a distributor (2) for the intake air;
one or more intake ducts (3) connected to such distributor delimited by at least one wall (11) and having at least one opening (4,5) on a surface (1) of such cylinder head suitable for connection to one or more cylinders;
a fuel injection channel (12) for each of said ducts passing through said wall; **characterized by** the fact that said wall has a protuberance (13) at the position of the outlet (14) of said channel inside said duct.

8. Method of production of a cylinder head according to claim 7, including:
use of the casting process to obtain part of said cylinder head including a portion of said wall (11) of at least one intake duct (3), **characterized by** the fact that it comprises the subsequent opening of a fuel injection channel (12) through said wall, in correspondence of said protuberence.

9. Engine according to any of the claims from 1 to 6, **characterized by** the fact that it comprises a cylinder head according to claim 7.

10. Fuel supply method in a combustion engine with an intake air distributor, one or more intake ducts connected to said distributor, delimited by at least one wall, **characterized by** the fact that the fuel is injected through said wall, in correspondence of a protuberance threreof.

11. Method according to claim 10, **characterized by** the fact that the fuel is gas.

## Patentansprüche

1. Verbrennungsmotor, umfassend
einen oder mehrere Zylinder;
einen Verteiler (2) für die Ansaugluft;
eine oder mehrere Ansaugführungen (3), die den Verteiler mit der Einspeisung der Zylinder verbindet bzw. verbinden, wobei die Führungen durch zumindest eine Wand (11) abgegrenzt sind;
einen Treibstoffeinspritzkanal (12) für jede der Führungen, der durch die Wand hindurch tritt;
**gekennzeichnet durch** die Tatsache, dass die Wand eine Protuberanz (13) an der Position der Mündung (14) des Kanals innerhalb der Führung aufweist.

2. Motor nach Anspruch 1, **gekennzeichnet durch** die Tatsache, dass er ein Gasmotor ist.

3. Motor nach Anspruch 1 oder 2, **gekennzeichnet durch** die Tatsache, dass der Abschnitt der Protuberanz in einer Ebene, die eine Achse des Kanals enthält und senkrecht zu der Wand der Führung verläuft, mehr oder weniger dreieckig ist.

4. Motor nach einem der vorstehenden Ansprüche, **gekennzeichnet durch** die Tatsache, dass die Protuberanz ein Stück mit zumindest einem Anteil der Wand der Führung ist.

5. Motor nach einem der vorstehenden Ansprüche, bei dem die Führung durch eine Krümmung **gekennzeichnet** ist und die Mündung (12) des Einspritzkanals an der Position der Krümmung angeordnet ist.

6. Motor nach Anspruch 5, **gekennzeichnet durch** die Tatsache, dass die Protuberanz an dem Innenteil der Kurve angeordnet ist.

7. Zylinderkopf für einen Verbrennungsmotor mit einem Verteiler (2) für die Ansaugluft;
einer oder mehreren Ansaugführungen (3), die mit dem Verteiler verbunden ist bzw. sind, die durch zumindest eine Wand (11) abgegrenzt ist bzw. sind und mit zumindest einer Öffnung (4, 5) auf einer Oberfläche (1) des Zylinderkopfs, die zum Verbinden mit einem oder mehreren Zylindern geeignet ist;
wobei ein Treibstoffeinspritzkanal (12) für jede der Führungen durch die Wand hindurch tritt;
**gekennzeichnet durch** die Tatsache, dass die Wand eine Protuberanz (13) an der Position der Mündung (14) des Kanals innerhalb der Führung aufweist.

8. Verfahren zur Herstellung eines Zylinderkopfs nach Anspruch 7, enthaltend
eine Verwendung des Gießverfahrens, um einen Teil des Zylinderkopfs mit einem Anteil der Wand (11) von zumindest einer Einlassführung (3) zu erhalten, **gekennzeichnet durch** die Tatsache, dass es das anschließende Öffnen eines Treibstoffeinspritzkanals (12) **durch** die Wand in Übereinstimmung mit der Protuberanz umfasst.

9. Motor nach einem der Ansprüche 1 bis 6, **gekennzeichnet durch** die Tatsache, dass er einen Zylinderkopf nach Anspruch 7 umfasst.

10. Treibstoffversorgungsverfahren in einem Verbrennungsmotor mit einem Ansaugluftverteiler, einer oder mehr Ansaugführungen, die mit dem Verteiler verbunden sind, abgegrenzt durch zumindest eine Wand, **gekennzeichnet durch** die Tatsache, dass der Treibstoff **durch** die Wand in Übereinstimmung mit einer Protuberanz davon eingespritzt wird.

11. Verfahren nach Anspruch 10, **gekennzeichnet durch** die Tatsache, dass der Treibstoff Gas ist.

## Revendications

1. Moteur à combustion interne comprenant:
un ou plusieurs cylindres;
un distributeur (2) pour l'air d'admission;
un ou plusieurs conduits d'admission (3) reliant ledit distributeur à l'alimentation desdits cylindres, les conduits étant délimités par au moins une paroi (11);
un canal d'injection de combustible (12) pour chacun desdits conduits passant à travers ladite paroi;
**caractérisé par le fait que** ladite paroi présente une protubérance (13) à la position de la sortie (14) dudit canal à l'intérieur dudit conduit.

2. Moteur selon la revendication 1, **caractérisé par le fait que** celui-ci est un moteur à gaz.

3. Moteur selon la revendication 1 ou 2, **caractérisé par le fait que** la section de ladite protubérance, dans un plan contenant un axe dudit canal et perpendiculaire à la paroi du conduit, est plus ou moins triangulaire.

4. Moteur selon l'une quelconque des revendications précédentes, **caractérisé par le fait que** ladite protubérance est une pièce avec au moins une portion de ladite paroi du conduit.

5. Moteur selon l'une quelconque des revendications précédentes, dans lequel le conduit est **caractérisé par** une courbe, et la sortie (12) du canal d'injection se situe à la position de ladite courbe.

6. Moteur selon la revendication 5, **caractérisé par le fait que** ladite protubérance est positionnée à la partie intérieure de ladite courbe.

7. Culasse pour un moteur à combustion incluant un distributeur (2) pour l'air d'admission;
un ou plusieurs conduits d'admission (3) reliés audit distributeur délimités par au moins une paroi (11) et ayant au moins une ouverture (4, 5) sur une surface (1) de ladite culasse apte à être reliée à un ou plusieurs cylindres;
un canal d'injection de combustible (12) pour chacun desdits conduits passant à travers ladite paroi;
**caractérisé par le fait que** ladite paroi présente une protubérance (13) à la position de la sortie (14) dudit canal à l'intérieur dudit conduit.

8. Procédé de fabrication d'une culasse selon la revendication 7, comprenant:
l'utilisation du procédé de coulage pour obtenir une partie de ladite culasse incluant une portion de ladite paroi (11) d'au moins un conduit d'admission (3),
**caractérisé par le fait qu'**il comprend l'ouverture suivante d'un canal d'injection de combustible (12) à travers ladite paroi, en correspondance avec ladite protubérance.

9. Moteur selon l'une quelconque des revendications 1 à 6, **caractérisé par le fait qu'**il comprend une culasse selon la revendication 7.

10. Procédé d'alimentation en combustible dans un moteur à combustion avec un distributeur d'air d'admission, un ou plusieurs conduits d'admission reliés audit distributeur, délimités par au moins une paroi, **caractérisé par le fait que** le combustible est injecté à travers ladite paroi en correspondance avec une protubérance de celle-ci.

11. Procédé selon la revendication 10, **caractérisé par le fait que** le combustible est du gaz.
